# EUROPEAN PATENT APPLICATION

(11) **EP 4 498 256 A1**
(43) Date of publication of application: **29.01.2025**
(21) Application number: 23799210.2
(22) Date of filing: 27.04.2023
(51) Int. Cl.: G06F 13/16

(54) **METHOD AND APPARATUS FOR UNIFYING CLOCK FREQUENCIES**

(30) Priority: 06.05.2022 CN 202210488354
(71) Applicant: Huawei Technologies Co., Ltd., Shenzhen, Guangdong 518129 (CN)
(72) Inventor: GUO, Jian, Shenzhen, Guangdong 518129 (CN); LIANG, Chuanzeng, Shenzhen, Guangdong 518129 (CN); MAK, Ki Leung, Shenzhen, Guangdong 518129 (CN)
(74) Representative: Körber, Martin Hans
(86) International application number: PCT/CN2023/091264
(87) International publication number: WO 2023/213224

(57) **Abstract**

This application provides a method for unifying clock frequencies and an apparatus, and relates to the field of chip technologies, to unify frequencies of a SerDes and a DRAM when a memory is expanded through the serial interface, so that a system operates in a synchronous clock domain, thereby implementing a low delay. The solution is as follows: A clock of a first phase-locked loop coupled to a serial interface in a main chip and a clock of a second phase-locked loop coupled to a serial interface in a buffer chip have a same source, and a dual in-line memory module interface in the buffer chip and the serial interface in the buffer chip are coupled to the second phase-locked loop. The main chip performs a first rate negotiation with the buffer chip to determine a first target rate. The main chip initializes the buffer chip at the first target rate, and determines a second target rate supported by the dual in-line memory module interface between the buffer chip and a memory chip. The main chip configures both a clock frequency of the first phase-locked loop and a clock frequency of the second phase-locked loop as a clock frequency corresponding to the second target rate, to complete a second rate negotiation. Embodiments of this application are used to expand a DRAM system through a serial interface.

## Description

This application claims priority to Chinese Patent Application No. 202210488354.X, filed with the China National Intellectual Property Administration on May 6, 2022 and entitled "METHOD FOR UNIFYING CLOCK FREQUENCIES AND APPARATUS", which is incorporated herein by reference in its entirety.

### TECHNICAL FIELD

Embodiments of this application relate to the field of chip technologies, and in particular, to a method for unifying clock frequencies and an apparatus.

### BACKGROUND

Currently, upgrade of a double data rate (Double data rate, DDR) system is slow. A serial interface, that is, a serializer/deserializer (serializer/deserializer, SerDes), is typically used in the industry to expand an RRD module or another memory medium to improve a rate of a memory (memory) bandwidth.

In the solution of memory expanding by expanding a dynamic random access memory (Dynamic Random access memory, DRAM) through a SerDes, a main central processing unit (Central Processing Unit, CPU) chip, a buffer chip, and a DRAM chip are typically involved. An interface between the main CPU chip and the buffer chip is a serial interface SerDes, and an interface between the buffer chip and the DRAM chip is a dual in-line memory module (Dual In-line Memory Module, DIMM) interface. A transmission frequency of the SerDes and a transmission frequency of the DRAM are not associated as they belong to two systems.

Specifically, the DIMM interface of the DRAM has a plurality of transmission frequencies in application scenarios. The system can determine an operating frequency of the DRAM chip only after a DIMM chip is inserted into a slot of the DRAM. Then, the system configures, based on the frequency, clock frequencies of a phase-locked loop (Phase-Locked Loop, PLL) 3 in the buffer chip and a clock clk_ddr of a DDR in the buffer chip as a specified frequency corresponding to the frequency. On a SerDes interface side, a current serial protocol usually operates at a fixed frequency. Therefore, in current technologies, a clock clk_sds of the serial interface SerDes in the buffer chip and the clock clk_ddr of the DDR are generally asynchronous clocks, and asynchronous processing is separately performed on a data flow across a clock domain (clock domain) in a transmit (transmit, TX) direction and a receive (receive, RX) direction. In addition, generally, a system bus clock clk_bus in the main CPU chip and the working clock clk_sds of the SerDes serial interface are also asynchronous clocks, and asynchronous processing also needs to be performed on data in a TX direction and an RX direction. In this way, a data flow needs to cross an asynchronous clock domain four times in the TX direction and the RX direction. In addition, if a clock of the main CPU chip and a clock of the buffer chip do not have a same source, one data flow needs to cross an asynchronous clock domain six times, and a delay caused by the data flow crossing the asynchronous clock domain is high.

### SUMMARY

Embodiments of this application provide a method for unifying clock frequencies and an apparatus, to unify frequencies of a SerDes and a DRAM when a memory is expanded through the serial interface, so that an entire system operates in a synchronous clock domain, a quantity of times that a data flow crosses an asynchronous clock domain is reduced, and finally an objective of a low delay is achieved.

To achieve the foregoing objectives, the following technical solutions are used in embodiments of this application.

According to a first aspect, a method for unifying clock frequencies is provided, applied to a system for expanding a memory through a serial interface. The system includes a main chip, a buffer chip, and at least one memory chip coupled to the buffer chip, a clock of a first phase-locked loop coupled to a serial interface in the main chip and a clock of a second phase-locked loop coupled to a serial interface in the buffer chip have a same source, and both a dual in-line memory module interface in the buffer chip and the serial interface in the buffer chip are coupled to the second phase-locked loop; and the method includes:

The system performs a first rate negotiation between the main chip and the buffer chip to determine a first target rate at which the main chip accesses the buffer chip after controlling the main chip and the buffer chip to complete serial interface initialization; the system determines a second target rate supported by the dual in-line memory module interface between the buffer chip and the memory chip after controlling the main chip to complete initialization of the buffer chip at the first target rate; and the system configures both a clock frequency of the first phase-locked loop in the main chip and a clock frequency of the second phase-locked loop in the buffer chip as a clock frequency corresponding to the second target rate, and controls the main chip to complete a second rate negotiation with the buffer chip.

The serial interface may be understood as a SerDes, the phase-locked loop may be a PLL, and the dual in-line memory module may be a DIMM.

Therefore, in the system for expanding a memory through a serial interface, all SerDeses of the system in this application use a same same-source reference clock, and a working clock of a DRAM comes from a same PLL as the SerDes. That is, clocks of the DRAM and the SerDes have a same source.

Based on a change of the same-source clock, in a system startup process, in this application, a rate negotiation is completed through the two rate negotiations, to unify frequencies of the DRAM and the SerDes. In the first rate negotiation, the main chip and the buffer chip may first negotiate a low frequency rate, that is, the first target rate. At this rate, the main chip may initialize the buffer chip, and obtain information about the buffer chip, to be specific, obtain a rate of the memory chip inserted into the buffer chip. When obtaining the information about the buffer chip, the main chip may determine a frequency at which the DRAM and the SerDes work together, that is, a frequency corresponding to a highest rate of the DIMM interface in a case in which the memory chip is inserted into a slot. Then, the main chip initializes the frequency of the PLL in the main chip and the frequency of the PLL in the buffer chip to frequencies corresponding to the rate of the memory chip. Based on the initialized frequencies of the PLLs, the main chip and the buffer chip perform the second rate negotiation. When the negotiation succeeds, the DRAM and the SerDes obtain a unified target rate through negotiation, that is, the second target rate. After the two rate negotiations are completed, service transmission may start between the main chip, the buffer chip, and the memory chip.

In this way, the main chip and the buffer chip use a common reference clock, and highest rates of the main chip and the buffer chip are related to the highest rate supported by the memory chip of the DIMM interface in the buffer chip. When the highest rate supported by the memory chip of the DIMM interface changes, a transmission rate of the serial interface SerDes between the main chip and the buffer chip accordingly changes synchronously. In this way, when data crosses a plurality of chips, the chips still work in a synchronous clock domain, and no delay is consumed in asynchronous processing. This can reduce an additional delay of the system in an asynchronous clock.

In a possible design, the performing a first rate negotiation between the main chip and the buffer chip to determine a first target rate at which the main chip accesses the buffer chip after controlling the main chip and the buffer chip to complete serial interface initialization includes: controlling the first phase-locked loop in the main chip and the second phase-locked loop in the buffer chip to perform frequency multiplication based on a same-source reference clock to obtain the operating clock frequency of the first phase-locked loop and the operating clock frequency of the second phase-locked loop, where the operating clock frequency of the first phase-locked loop is the same as the operating clock frequency of the second phase-locked loop; determining a transmission rate of the serial interface in the main chip based on the operating clock frequency of the first phase-locked loop, and determining a transmission rate of the serial interface in the buffer chip based on the operating clock frequency of the second phase-locked loop; and performing the first rate negotiation between the main chip and the buffer chip based on the transmission rate of the serial interface in the main chip and the transmission rate of the serial interface in the buffer chip; and when the negotiation succeeds, determining the transmission rate of the serial interface in the main chip and the transmission rate of the serial interface in the buffer chip as the first target rate at which the main chip accesses the buffer chip.

It should be understood that after the main chip and the buffer chip are powered on and complete initialization of the serial interfaces, and clock frequencies in the first phase-locked loop in the main chip and the second phase-locked loop in the buffer chip are determined based on a frequency of the same-source reference clock, it is equivalent to that a transmission rate of the main chip and a transmission rate of the buffer chip are determined, where the transmission rates are the same. In this way, after the main chip successfully performs the rate negotiation with the buffer chip based on the determined transmission rates, it is equivalent to that the first target rate at which the main chip can access the buffer chip is determined. In other words, a low frequency rate is obtained through negotiation between the main chip and the buffer chip, and the main chip may access the buffer chip at the low frequency rate.

In a possible design, the determining a second target rate supported by the dual in-line memory module interface between the buffer chip and the memory chip after controlling the main chip to complete initialization of the buffer chip at the first target rate includes: controlling the serial interface in the main chip to access a register in the buffer chip at the first target rate, to initialize the register in the buffer chip; controlling the buffer chip to access, through the dual in-line memory module interface, the memory chip connected to the buffer chip, to determine the highest rate supported by the dual in-line memory module interface, and using the highest rate supported by the dual in-line memory module interface as the second target rate; and controlling the buffer chip to record the second target rate in the register in the buffer chip.

Considering that the memory chip inserted into the DIMM interface in the buffer chip may support different access rates, when the main chip can access the buffer chip, the buffer chip may record, in the register in the buffer chip, an access rate supported by the memory chip currently inserted into the DIMM interface. In this way, the main chip may determine, from the register, the highest rate (the second target rate) supported by the memory chip, to adjust the clock frequencies of the main chip and the buffer chip to a clock frequency that matches the highest rate. This avoids crossing an asynchronous clock domain and reduces a data transmission delay.

In a possible design, the configuring both a clock frequency of the first phase-locked loop in the main chip and a clock frequency of the second phase-locked loop in the buffer chip as a clock frequency corresponding to the second target rate, and controlling the main chip to complete a second rate negotiation with the buffer chip includes: controlling the main chip to read the second target rate from the register in the buffer chip; controlling the main chip to initialize the clock frequency of the first phase-locked loop and the clock frequency of the second phase-locked loop based on the second target rate, to enable the clock frequency of the first phase-locked loop and the clock frequency of the second phase-locked loop to be the clock frequency corresponding to the second target rate; and controlling the serial interface in the main chip and the serial interface in the buffer chip to perform the second rate negotiation at the second target rate.

In this way, a SerDes between the main chip and the buffer chip, the DRAM interface between the buffer chip and the memory chip work at a same clock frequency (frequency/second target rate), clocks of the first PLL and the second PLL have a same source, and a clock in the buffer chip and a clock of the serial interface are also clocks with a same source. Based on this, when the main chip accesses the memory chip through the buffer chip, crossing the asynchronous clock domain is avoided and the data transmission delay is reduced.

In a possible design, when a rate negotiation is performed between the serial interface in the main chip and the serial interface in the buffer chip, any specified integer rate is supported. In other words, when the rate negotiation is performed between the serial interface in the main chip and the serial interface in the buffer chip, it is not limited to supporting negotiations of only some fixed frequencies (for example, 8 Gbps and 16 Gbps of a PCIE). Such two rate negotiation processes in this application may support negotiation of the any specified integer rate.

According to a second aspect, a system for expanding a memory through a serial interface is provided. The system includes a main chip, a buffer chip, and at least one memory chip coupled to the buffer chip, a clock of a first phase-locked loop coupled to a serial interface in the main chip and a clock of a second phase-locked loop coupled to a serial interface in the buffer chip have a same source, and both a dual in-line memory module interface in the buffer chip and the serial interface in the buffer chip are coupled to the second phase-locked loop.

The main chip is configured to: complete a first rate negotiation with the buffer chip to determine a first target rate at which the main chip accesses the buffer chip after completing serial interface initialization with the buffer chip; determine a second target rate supported by the dual in-line memory module interface between the buffer chip and the memory chip after completing initialization of the buffer chip at the first target rate; and configure a clock frequency of the first phase-locked loop in the main chip to a clock frequency corresponding to the second target rate. The buffer chip is configured to configure a clock frequency of the second phase-locked loop in the buffer chip to the clock frequency corresponding to the second target rate. The main chip is further configured to complete a second rate negotiation with the buffer chip.

For beneficial effects of the second aspect and any possible design of the second aspect, refer to the descriptions of the first aspect.

In a possible design, the main chip is configured to control the first phase-locked loop L to perform frequency multiplication based on a same-source reference clock to obtain the operating clock frequency of the first phase-locked loop. The buffer chip is configured to control the second phase-locked loop to perform frequency multiplication based on the same-source reference clock to obtain the operating clock frequency of the second phase-locked loop, where the operating clock frequency of the first phase-locked loop is the same as the operating clock frequency of the second phase-locked loop. The main chip is configured to determine a transmission rate of the serial interface in the main chip based on the operating clock frequency of the first phase-locked loop. The buffer chip is configured to determine a transmission rate of the serial interface in the buffer chip based on the operating clock frequency of the second phase-locked loop. The main chip is configured to: perform the first rate negotiation between the main chip and the buffer chip based on the transmission rate of the serial interface in the main chip and the transmission rate of the serial interface in the buffer chip; and when the negotiation succeeds, determine the transmission rate of the serial interface in the main chip as the first target rate at which the main chip accesses the buffer chip. The buffer chip is configured to: when the negotiation succeeds, determine the transmission rate of the serial interface in the buffer chip as the first target rate at which the main chip accesses the buffer chip.

In a possible design, the main chip is configured to control the serial interface in the main chip to access a register in the buffer chip at the first target rate, to initialize the register in the buffer chip. The buffer chip is configured to: access, through the dual in-line memory module interface, the memory chip connected to the buffer chip, to determine a highest rate supported by the dual in-line memory module interface, and use the highest rate supported by the dual in-line memory module interface as the second target rate; and record the second target rate in the register in the buffer chip.

In a possible design, the main chip is configured to: read the second target rate from the register in the buffer chip; initialize the clock frequency of the first phase-locked loop and the clock frequency of the second phase-locked loop based on the second target rate, to enable the clock frequency of the first phase-locked loop and the clock frequency of the second phase-locked loop to be the clock frequency corresponding to the second target rate; and control the serial interface in the main chip and the serial interface in the buffer chip to perform the second rate negotiation at the second target rate.

In a possible design, when the rate negotiation is performed between the serial interface in the main chip and the serial interface in the buffer chip, any specified integer rate is supported.

According to a third aspect, a frequency control apparatus is provided. The frequency control apparatus is used in a system for expanding a memory through a serial interface, the system includes a main chip, a buffer chip, and at least one memory chip coupled to the buffer chip, a clock of a first phase-locked loop coupled to a serial interface in the main chip and a clock of a second phase-locked loop coupled to a serial interface in the buffer chip have a same source, and both a dual in-line memory module interface in the buffer chip and the serial interface in the buffer chip are coupled to the second phase-locked loop; and the frequency control apparatus includes:
a rate negotiation unit, configured to: control the main chip and the buffer chip to perform a first rate negotiation between the main chip and the buffer chip to determine a first target rate at which the main chip accesses the buffer chip after controlling the main chip and the buffer chip to complete serial interface initialization; and a rate obtaining unit, configured to: determine a second target rate supported by a DIMM interface between the buffer chip and the memory chip after controlling the main chip to complete initialization of the buffer chip at the first target rate, where the rate negotiation unit is further configured to: configure both a clock frequency of the first PLL in the main chip and a clock frequency of the second PLL in the buffer chip as a clock frequency corresponding to the second target rate, and control the main chip to complete a second rate negotiation with the buffer chip.

For beneficial effects of the third aspect and any possible design of the third aspect, refer to the descriptions of the first aspect.

In a possible design, the rate negotiation unit is configured to: control the first phase-locked loop in the main chip and the second phase-locked loop in the buffer chip to perform frequency multiplication based on a same-source reference clock to obtain the operating clock frequency of the first phase-locked loop and the operating clock frequency of the second phase-locked loop, where the operating clock frequency of the first phase-locked loop is the same as the operating clock frequency of the second phase-locked loop; determine a transmission rate of the serial interface in the main chip based on the operating clock frequency of the first phase-locked loop, and determine a transmission rate of the serial interface in the buffer chip based on the operating clock frequency of the second phase-locked loop; and perform the first rate negotiation between the main chip and the buffer chip based on the transmission rate of the serial interface in the main chip and the transmission rate of the serial interface in the buffer chip; and when the negotiation succeeds, determine the transmission rate of the serial interface in the main chip and the transmission rate of the serial interface in the buffer chip as the first target rate at which the main chip accesses the buffer chip.

In a possible design, the rate obtaining unit is configured to: control the serial interface in the main chip to access a register in the buffer chip at the first target rate, to initialize the register in the buffer chip; control the buffer chip to access, through the dual in-line memory module interface, the memory chip connected to the buffer chip, to determine a highest rate supported by the dual in-line memory module interface, and use the highest rate supported by the dual in-line memory module interface as the second target rate; and control the buffer chip to record the second target rate in the register in the buffer chip.

In a possible design, the rate negotiation unit is configured to: control the main chip to read the second target rate from the register in the buffer chip; control the main chip to initialize the clock frequency of the first phase-locked loop and the clock frequency of the second phase-locked loop based on the second target rate, to enable the clock frequency of the first phase-locked loop and the clock frequency of the second phase-locked loop to be the clock frequency corresponding to the second target rate; and control the serial interface in the main chip and the serial interface in the buffer chip to perform the second rate negotiation at the second target rate.

In a possible design, when the rate negotiation is performed between the serial interface in the main chip and the serial interface in the buffer chip, any specified integer rate is supported.

According to a fourth aspect, a frequency control apparatus is provided, including at least one processor. The at least one processor is connected to a memory, and the at least one processor is configured to read and execute a program stored in the memory, so that the apparatus performs the method according to the first aspect or any one of the possible designs of the first aspect.

According to a fifth aspect, a frequency control apparatus is provided. The frequency control apparatus includes a main chip, a buffer chip, and a memory chip. The main chip is coupled to a memory, and is configured to read and execute program instructions stored in the memory, to implement the method according to the first aspect or any one of the possible designs of the first aspect.

According to a sixth aspect, a frequency control apparatus is provided. The apparatus is included in an electronic device, and the apparatus has a function of implementing behavior of the electronic device in any one of the foregoing aspects and any possible implementation. The function may be implemented by hardware, or may be implemented by hardware executing corresponding software. The hardware or the software includes one or more modules or units corresponding to the foregoing function, for example, a rate negotiation module or unit and a rate obtaining module or unit.

According to a seventh aspect, a computer-readable storage medium is provided. The computer-readable storage medium includes computer instructions. When the computer instructions are run on an electronic device, the electronic device is enabled to perform the method according to the first aspect and any one of the possible designs of the first aspect.

According to an eighth aspect, a computer program product is provided. When the computer program product runs on a computer or a processor, the computer or the processor is enabled to perform the method according to the first aspect and any one of the possible implementations.

It may be understood that the frequency control apparatus, the computer-readable storage medium, the computer program product, or the like provided above may be applied to the corresponding method provided above. Therefore, for beneficial effects that can be achieved by the frequency control apparatus, computer-readable storage medium, or the computer program product, refer to the beneficial effects in the corresponding method. Details are not described herein again.

These aspects or other aspects in this application are more concise and comprehensible in the following descriptions.

### BRIEF DESCRIPTION OF DRAWINGS

FIG. 1 is a diagram of a solution of expanding a DRAM through a SerDes according to an embodiment of this application;
FIG. 2 is a diagram of networking of a system for expanding a DRAM through a serial interface according to an embodiment of this application;
FIG. 3 is a diagram of a structure of networking of a system according to an embodiment of this application;
FIG. 4 is a schematic flowchart of a method for unifying clock frequencies according to an embodiment of this application;
FIG. 5 is a schematic flowchart of a method for unifying clock frequencies according to an embodiment of this application;
FIG. 6 is a diagram of a structure of a system for expanding a memory through a serial interface according to an embodiment of this application;
FIG. 7 is a diagram of a structure of a system for expanding a memory through a serial interface according to an embodiment of this application; and
FIG. 8 is a diagram of a structure of a system for expanding a memory through a serial interface according to an embodiment of this application.

### DESCRIPTION OF EMBODIMENTS

For ease of understanding, some concepts related to embodiments of this application are described for reference by using examples. Details are as follows:

DRAM: The DRAM is abbreviation of a dynamic random access memory, and is a most common system memory. The DRAM can maintain data for a very short time. To maintain the data, the DRAM uses a capacitor for storage, and needs to be refreshed (refreshed) once after a period of time. If a memory cell in the DRAM is not refreshed, stored information is lost. For example, the data is lost when the DRAM is powered off.

DDR: The DDR is abbreviation of a double data rate. Currently, a DDR1 to a DDR5 are generations of memories. Transmission rates of memories of different generations are different. Theoretically, the DDR1 represents a 1^{st} generation. A transmission rate of the DDR2 is twice a transmission rate of the DDR1, and a transmission rate of the DDR5 is twice a transmission rate of the DDR3.

DIMM: The DIMM may be understood as a memory module inserted into a slot on the DRAM, and can provide a 64-bit data channel.

SerDes: The SerDes is a mainstream time-division multiplexing and point-to-point serial communication technology. To be specific, a plurality of channels of low-speed parallel signals are converted into high-speed serial signals at a transmitter, and the high-speed serial signals are converted back into the low-speed parallel signals at a receiver after passing through a transmission medium. Such a point-to-point serial communication technology fully uses a channel capacity of the transmission medium, reduces quantities of required transmission channels and component pins, and improves a signal transmission speed, thereby greatly reducing communication costs.

Asynchronous clock: When a relationship between phases of two clocks is fixed, the two clocks may be referred to as synchronous clocks (synchronous clocks). Generally, two clocks with a same source, for example, two clocks generated by a same mixed mode clock manager (Mixed Mode Clock Manager, MMCM) or phase-locked loop (Phase-Locked Loop, PLL), may be referred to as synchronous clocks. Therefore, a master clock and a derived clock corresponding to the master clock may be constrained to a same clock group. If phases of two clocks cannot be determined, the two clocks may be referred to as asynchronous clocks (asynchronous clocks). Two clocks from different crystal oscillators are definitely asynchronous clocks. Typically, different master clocks in a design are definitely asynchronous clocks. Therefore, the two master clocks and their derived clocks may be constrained to different clock groups.

PLL: The PLL controls a frequency and a phase of an oscillation signal in a loop via an externally input reference signal. Because the PLL can automatically track a frequency of the input signal based on a frequency of an output signal, the PLL is usually used in a closed-loop tracking circuit.

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. In the descriptions of embodiments, unless otherwise specified, "a plurality of" means two or more.

In an entire computer system, a memory is a key factor that determines performance of the entire system. If a fast CPU is not matched with a good memory system, good performance of the CPU cannot be brought into full play. Currently, server CPU cores (from 8 cores to 126 cores) have increased 16-fold, while a quantity of pins (pins) and a quantity of memory channels (from 4 channels to 8 channels) have increased only 2-fold. It can be learned that a development rate of a memory bandwidth cannot keep up with a development speed of the CPU core, and an average DRAM memory bandwidth per core is declining.

A standard DDR module usually uses a 64-bit structure, can transmit 64-bit binary data at a time, and corresponds to 64-bit parallel memory buses. However, due to inherent limitations, it is difficult for the parallel buses to achieve leapfrogging performance improvement. First, the parallel buses are easy to interfere with each other, so that a transmission signal is unstable, and a frequency is difficult to quickly increase. It is a technical reality that memory specifications are gradually and slowly improved, not just for market consumption considerations. Second, parallel data sent by a memory module is required to arrive at a receiver synchronously in a same transmission beat, which requires that lengths of 64 lines in a printed circuit board (Printed Circuit Board, PCB) be kept strictly consistent, and imposes a strict requirement on a PCB design. As a memory frequency continues to increase, an allowed line length error is getting smaller and smaller, which eventually leads to a big problem in a line design. From this trend, development space of a parallel transmission mode in the memory field is limited, and the parallel transmission mode in the memory field eventually develops in a direction of a narrow bit width and serialization. Third, similarly, due to wiring reasons, a DDR system can achieve only dual channels at most, and needs to use 128 data lines that occupy a large PCB area. Even if four channels are to be achieved, a motherboard does not have large PCB space to be used, and a data synchronization problem brings more troubles. Due to various defects, an upgrade of the DDR system is slow. Therefore, the industry starts to attempt to use a serial interface to expand a DDR module or another memory medium.

Currently, an open memory interface (Open Memory Interface, OMI) technology may be used to improve a memory bandwidth and a memory capacity of a system. The DDR system aims to address these near-memory challenges in two ways: by moving to a SerDes, and by using a DIMM controller. That is, a SerDes connection replaces a current DDR interface, and provides a higher speed with fewer signals. In addition, the OMI basically removes a memory controller from a host, and integrates the memory controller on a memory DIMM, thereby simplifying a processor design. In addition, the controller may be connected to many different types of memories, and acts as a bridge between the memory and a processor.

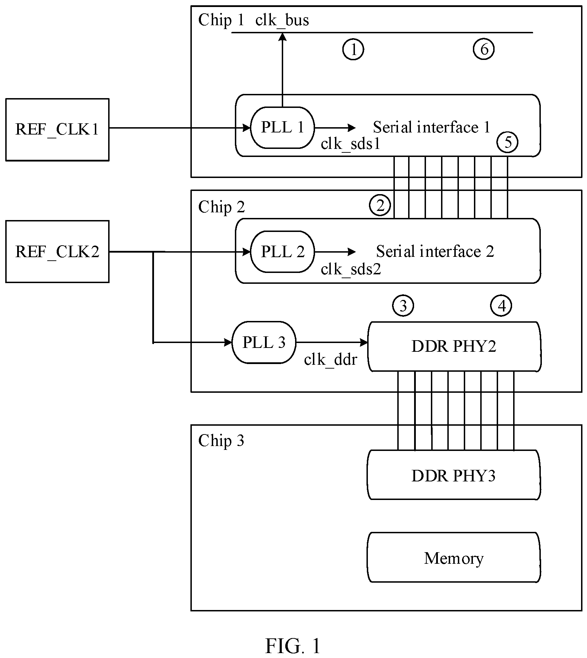

As shown in FIG. 1, in a solution of expanding a DRAM through a SerDes, a chip 1 is a main chip (a main CPU chip), a chip 2 is a buffer chip, and a chip 3 is a memory chip. One chip 2 may be coupled to a plurality of chips 3 to expand the memory. An interface between the chip 1 and the chip 2 is a serial interface SerDes, and an interface between the chip 2 and the chip 3 is a DIMM parallel interface.

In an existing solution, there is no relationship between an operating frequency of the SerDes and an operating frequency of a DRAM. The chip 1 includes a bus clock clk_bus and a logic clock (clk_logic). A reference clock of a working clock clk_sds1 of a PLL 1 coupled to a SerDes1 (serial interface 1) is REF_CLK1. A reference clock of a working clock clk_sds2 of a PLL 2 on coupled to a SerDes2 (serial interface 2) in the chip 2 is REF_CLK2. A working clock clk_ddr of a DDR physical interface (Physical Interface, PHY) 2 coupled to a DIMM interface in the chip 2 and the reference clock of clk_sds2 have a same source, that is, REF_CLK2.

In an application scenario, the DIMM interface has transmission rates corresponding to a plurality of types of frequencies. For example, transmission rates of a DDR5 include 4.8 GT/s, 5.200 GT/s, 6.800 GT/s, 8.400 GT/s, and the like. Only when a DIMM memory module (DDR PHY3) is inserted into a slot of the DRAM, the chip 1 can determine an operating frequency of the DRAM, and the chip 1 can configure, based on the operating frequency of the DRAM, the working clock clk_ddr of a DDR PHY 2 coupled to a DIMM interface in the chip 2 as the operating frequency. On the SerDes2 interface side of the chip 2, a current serial protocol usually also operates at a fixed frequency. For example, a data rate (data rate) of a peripheral component interconnect express (peripheral component interconnect express, PCIe) protocol usually has a plurality of transmission rates of fixed frequencies, for example, 2.5 GT/s, 5 GT/s, 8 GT/s, 16 GT/s, and 32 GT/s.

Therefore, the operating frequencies of the DRAM and the SerDes are not unified. In other words, in the current solution of expanding a DRAM through a SerDes, clk_sds2 and clk_ddr in the chip 2 are usually asynchronous clocks, and a data flow needs to separately cross a clock domain in a TX direction and an RX direction. To be specific, asynchronous processing needs to be performed on a data flow shown in FIG. 1 when the data flow passes through a TX direction indicated by ③ and an RX direction indicated by ④. In addition, generally, the system bus clock clk_bus in the chip 1 and the working clock clk_sds1 of the serial interface SerDes1 in the chip 1 are also asynchronous clocks. Asynchronous processing also needs to be performed on a data flow when the data flow passes through a TX direction indicated by ① in FIG. 1 and an RX direction indicated by ⑥ in FIG. 1.

In addition, if the SerDes1 in the chip 1 and the SerDes2 in the chip 2 share a reference clock, and frequencies of clk_sds1 and clk_sds2 are unified, asynchronous processing does not need to be performed on a data flow when the data flow passes through a TX direction indicated by ② and an RX direction indicated by ⑤. If the SerDes1 in the chip 1 and the SerDes2 in the chip 2 do not share a reference clock (the PLL 1 uses REF_CLK1 and the PLL 2 uses REF _CLK2), asynchronous processing needs to be performed on a data flow when the data flow passes through a TX direction indicated by ② and an RX direction indicated by ⑤.

In this way, when the operating frequencies of the DRAM and the SerDes are not unified, if the chip 1 and the chip 2 use clocks with a same source, a data flow needs to cross an asynchronous clock domain for four times. If the chip 1 and the chip 2 do not use clocks with a same source, a data flow needs to cross an asynchronous clock domain for six times. In both cases, an additional delay is increased and basically cannot be less than 10 ns.

Therefore, this application provides a method for unifying clock frequencies and an apparatus, to unify frequencies of a DRAM and a SerDes when a memory is expanded through a serial interface, so that an entire system operates in a synchronous clock domain, a quantity of times that a data flow crosses an asynchronous clock domain is reduced, and finally an objective of a low delay is achieved.

In the system for expanding a memory through a serial interface, all SerDeses of the system in this application use a same-source reference clock, and a working clock of the DRAM comes from a same PLL as the SerDes. That is, clocks of the DRAM and the SerDes have a same source.

Based on a change of the same-source clock, in a system startup process, in this application, a rate negotiation is completed through two rate negotiations, to unify the frequencies of the DRAM and the SerDes. In a first rate negotiation, a main chip and a buffer chip may first negotiate to a low frequency rate. At this rate, the main chip may initialize the buffer chip, and obtain information about the buffer chip, to be specific, obtain a rate of a memory chip inserted into the buffer chip. When obtaining the information about the buffer chip, the main chip may determine a frequency at which the DRAM and the SerDes work together, that is, a frequency corresponding to a highest rate of a DIMM interface in a case in which the memory chip is inserted into a slot. Then, the main chip initializes a frequency of a PLL in the main chip and a frequency of a PLL in the buffer chip to frequencies corresponding to the rate of the memory chip. Based on the initialized frequencies of the PLLs, the main chip and the buffer chip perform a second rate negotiation. When the negotiation succeeds, the DRAM and the SerDes obtain a uniform target rate through negotiation. After the two rate negotiations are completed, service transmission may start between the main chip, the buffer chip, and the memory chip.

In this way, the main chip and the buffer chip use a common reference clock, and highest rates of the main chip and the buffer chip are related to a highest rate supported by the memory chip of the DIMM interface in the buffer chip. When the highest rate supported by the memory chip of the DIMM interface changes, a transmission rate of the serial interface SerDes between the main chip and the buffer chip accordingly changes synchronously. In this way, when data crosses a plurality of chips, the chips still work in the synchronous clock domain, and no delay is consumed in asynchronous processing. This can reduce an additional delay of the system in the asynchronous clock.

It should be noted that there is usually a multiple relationship between a transmission rate and a transmission frequency (frequency). For example, a "quad pumped" quadruple concurrency technology used in a front-side bus (Front-Side Bus, FSB) is improved, and the "quad pumped" is to transfer data four times in each bus clock cycle. In other words, a data transmission rate of a bus is equal to four times a clock frequency of the bus. For example, if the clock frequency of the bus is 333 MHz, the data transmission rate of the bus is 1332 MT/s, that is, 1.332 GT/s.

In this application, when it is determined that the transmission rate of the SerDes is consistent with a transmission rate of the DIMM interface, it is equivalent to determining that clock frequencies of a PLL 1 and a PLL 2 are consistent, and when reference clocks of the PLL 1 and the PLL 2 have a same source, cross-clock-domain processing does not need to be performed when data is transmitted across the main chip, the buffer chip, and the memory chip.

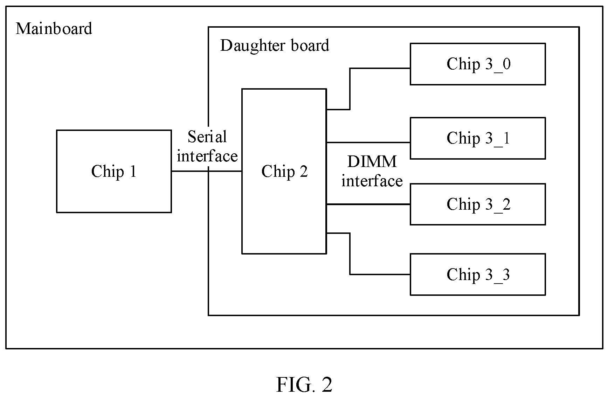

The method for unifying clock frequencies provided in this application may be applied to networking of a system for expanding a DRAM through a serial interface. A structure of the networking may be shown in FIG. 2, and includes three types of chips. A chip 1 is a main chip or a main CPU chip, and a chip 2 is a buffer chip. Chips 3 are DRAM memory chips, and include a chip 3_0, a chip 3_1, a chip 3_2, and a chip 3_3 shown in FIG. 2. The chip 1 is located on a mainboard, and the chip 2 and the chip 3 are located on a daughter board. Certainly, the networking shown in FIG. 2 is a schematic form, and the chip 2 and the chip 3 may also be directly installed on the mainboard.

An interface between the chip 1 and the chip 2 is a serial interface (SerDes), and an interface between the chip 2 and the chip 3 is a DIMM interface (DIMM parallel interface). The chip 1 may expand more DIMM interfaces through the chip 2, in other words, a quantity of chips 3 is not limited to 4 shown in FIG. 2. In this manner of expanding the DRAM through the serial interface, more DIMM interfaces may be expanded in the chip 2, thereby expanding a DRAM capacity. When a bandwidth of the serial interface is greater than a bandwidth of the directly connected DIMM interface, the quantity of chips 3 coupled to the chip 2 may be further increased, so that the chip 1 obtains a larger DRAM access bandwidth.

As the buffer chip, the chip 2 is used to expand a memory, so that the chip 1 can access more chips 3. In some embodiments, there may be at least two serial interfaces in the chip 1, and one serial interface is coupled to one chip 2 to obtain a larger DRAM capacity.

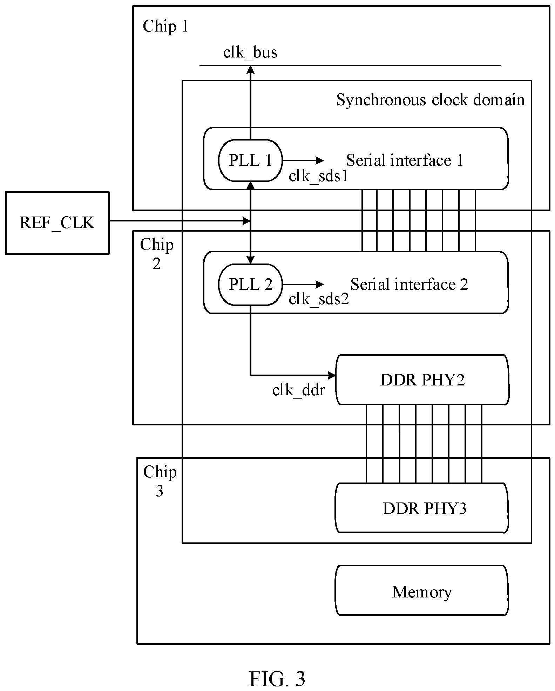

Based on the networking of the system provided in FIG. 2 of this application, for a structure of networking of a system of this application, refer to an architecture shown in FIG. 3. clk_bus is a bus clock of a chip 1, a PLL 1 is a phase-locked loop of a clock frequency of a serial interface SerDes1 in the chip 1, clk_sds1 is a clock for receiving and sending data through the serial interface SerDes1 in the chip 1, a PLL 2 is a phase-locked loop of a clock frequency of a serial interface SerDes2 in a chip 2, clk_sds2 is a clock for receiving and sending data through the serial interface SerDes2 in the chip 2, and clk_ddr is a clock of a DDR PHY2 in the chip 2 or a clock of a DIMM interface in the chip 2.

It should be understood that an objective of unifying clock frequencies of the SerDes and a DRAM in this application is to reduce a delay of the entire system. A key to reducing the delay is to reduce a quantity of times that a data path crosses an asynchronous clock domain. In the rate unification manner in this application, frequencies can be unified, so that interface logic circuits of the chip 1, the chip 2, and a chip 3 can work in a synchronous clock domain, thereby achieving an objective of not crossing the asynchronous clock domain.

Refer to FIG. 3. In this application, the serial interface SerDes1 in the chip 1 and the serial interface SerDes2 in the chip 2 use a common reference clock REF_CLK. In this application, a clock source of the PLL 1 and a clock source of the PLL 2 may be configured as the same reference clock REF_CLK through software. In this way, when the PLL 1 and the PLL 2 have a same source, the SerDes1 in the chip 1 and the SerDes2 in the chip 2 may work at a same frequency. The PLL 1 and the PLL 2 may play a role of locking the same frequency. The clock configuration process may be implemented through the chip 1. The PLL 1 and the PLL 2 share the same reference clock, and frequencies of clk_sds1 and clk_sds2 are the same, but phases of clk_sds1 and clk_sds2 are different. Therefore, when data output by the SerDes 1 in the chip 1 is sampled on the SerDes2 in the chip 2, only adjusting phases for sampling is required, and cross-clock-domain asynchronous processing does not need to be performed.

In addition, both clocks clk_sds2 and clk_ddr in the chip 2 come from the PLL 2, clk_sds2 and clk_ddr have a same frequency relationship or a frequency multiplication relationship, and clk_sds2 and clk_ddr are in a same clock domain. Therefore, digital logic of a controller (not shown in FIG. 3) of the serial interface and digital logic of a controller of a DDR are in a synchronous clock domain, and cross-clock asynchronous processing does not need to be performed.

Therefore, in an entire path in which a data flow passes through the chip 1 and the chip 2 and arrives at the chip 3, cross-clock-domain processing does not need to be performed. This can reduce the delay.

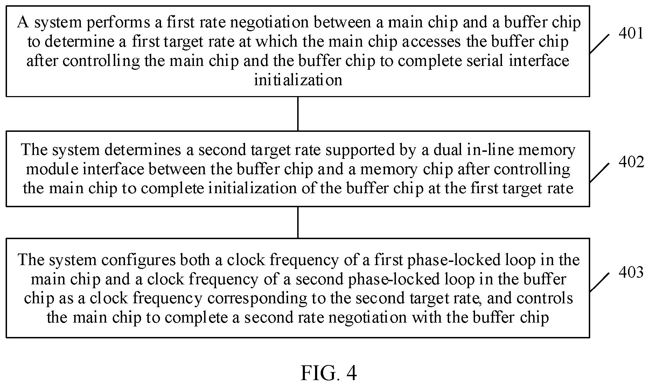

The following describes a method for unifying clock frequencies in this application. Refer to FIG. 4. The method is applied to a system for expanding a memory through a serial interface. The system includes a main chip, a buffer chip, and at least one memory chip coupled to the buffer chip. A clock of a first PLL coupled to a serial interface in the main chip and a clock of a second PLL coupled to a serial interface in the buffer chip have a same source. Both a DIMM interface in the buffer chip and the serial interface in the buffer chip are coupled to the second PLL. The method includes the following steps.

401: The system performs a first rate negotiation between the main chip and the buffer chip to determine a first target rate at which the main chip accesses the buffer chip after controlling the main chip and the buffer chip to complete serial interface initialization.

The main chip in FIG. 4 is equivalent to the chip 1 in FIG. 2 and FIG. 3, the buffer chip in FIG. 4 is equivalent to the chip 2 in FIG. 2 and FIG. 3, and the memory chip in FIG. 4 is equivalent to the chip 3 in FIG. 2 and FIG. 3. The first PLL in FIG. 4 is equivalent to the PLL 1 in FIG. 3, and the second PLL in FIG. 4 is equivalent to the PLL 2 in FIG. 3.

In some embodiments, after the system is powered on, the main chip may control the main chip and the buffer chip to complete serial interface initialization. In an initialization process, the main chip may control the first PLL and the second PLL to configure clock frequencies based on a same-source reference clock REF_CLK. The configured clock frequency of the first PLL is the same as the configured clock frequency of the second PLL, so that the serial interface SerDes1 in the main chip and the serial interface SerDes2 in the buffer chip have a same rate, that is, the first target rate. In this case, the main chip may control the serial interface SerDes1 in the main chip and the serial interface SerDes2 in the buffer chip to start a rate negotiation, that is, perform the first rate negotiation. If the negotiation succeeds, the main chip determines that a rate at which the main chip accesses the buffer chip is the first target rate.

402: The system determines a second target rate supported by a dual in-line memory module interface between the buffer chip and the memory chip after controlling the main chip to complete initialization of the buffer chip at the first target rate.

The main chip may access a register in the buffer chip through the serial interfaces SerDes1 and SerDes2, to initialize the register in the buffer chip, so that the register in the buffer chip can be accessed, including a read operation, a write operation, and a rewrite operation. In addition, the main chip may further initialize the DIMM interface in the buffer chip to obtain a highest rate supported by the memory chip inserted into the DIMM interface in the buffer chip, and record the highest rate in the register in the buffer chip. The highest rate supported by the memory chip herein is denoted as the second target rate.

403: The system configures both the clock frequency of the first phase-locked loop in the main chip and the clock frequency of the second phase-locked loop in the buffer chip as a clock frequency corresponding to the second target rate, and controls the main chip to complete a second rate negotiation with the buffer chip.

The main chip may access the register in the buffer chip to obtain the second target rate, configure the clock frequencies of the first PLL and the second PLL as the clock frequency corresponding to the second target rate, and enable the serial interface SerDes1 in the main chip and the serial interface SerDes2 in the buffer chip to perform the second rate negotiation based on the second target rate. After the negotiation succeeds, a frequency unification process ends. The SerDeses and a DRAM in the system work at a unified frequency.

Therefore, in a system for expanding a DDR through an interface SerDes, in this application, the clock of the first PLL in the main chip has a same source as the clock of the second PLL, and a clock of the DRAM is coupled to the second PLL. Based on this, the two rate negotiations may be performed, to unify clock frequencies of the first PLL, the second PLL, and the DRAM. When data is transmitted across chips in the system, the system still works in a synchronous clock domain. This can reduce a system delay.

Based on the system shown in FIG. 4, the following further describes a method for unifying clock frequencies provided in this application.

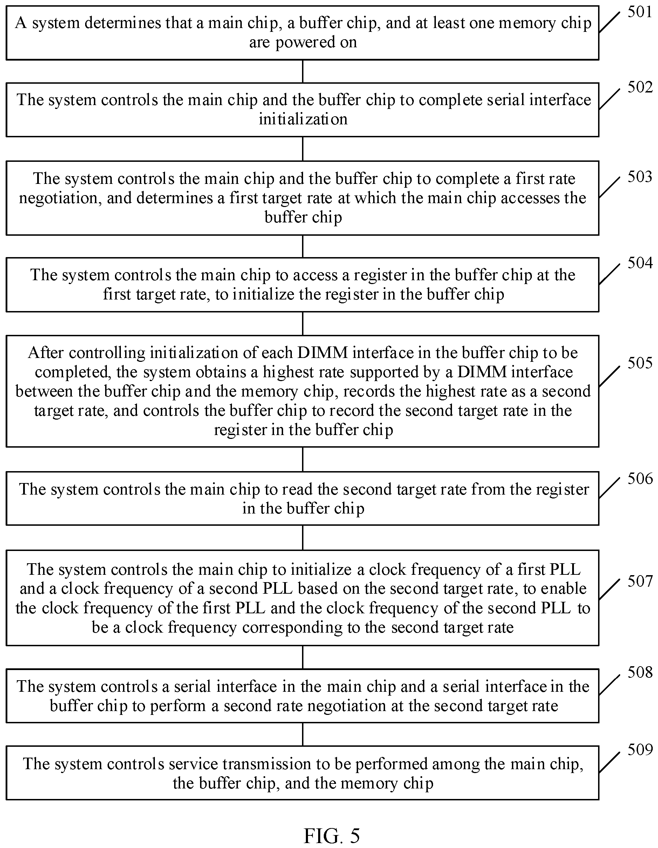

This application provides a method for unifying clock frequencies. As shown in FIG. 5, the method includes the following steps.

501: A system determines that a main chip, a buffer chip, and at least one memory chip are powered on.

For example, the system is in a terminal device. When a user performs a startup operation on the terminal device, after a mainboard is powered on, the main chip, the buffer chip, and the at least one memory chip on the mainboard are also powered on.

502: The system controls the main chip and the buffer chip to complete serial interface initialization.

In some embodiments, the main chip controls a first PLL in the main chip and a second PLL in the buffer chip to perform frequency multiplication based on a same-source reference clock to obtain an operating clock frequency of the first PLL and an operating clock frequency of the second PLL, where the operating clock frequency of the first PLL is the same as the operating clock frequency of the second PLL; and
determines a transmission rate of a serial interface 1 (SerDes1) in the main chip based on the operating clock frequency of the first PLL, and determines a transmission rate of a serial interface 2 (SerDes2) in the buffer chip based on the operating clock frequency of the second PLL.

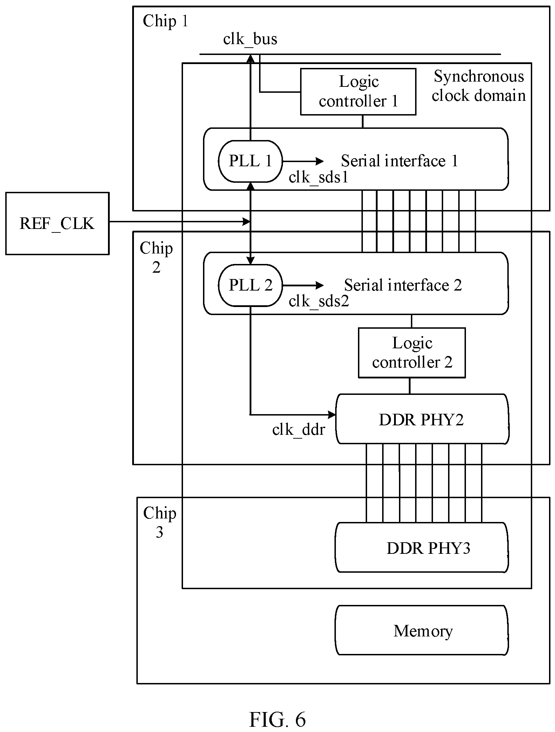

For example, refer to FIG. 6. The main chip includes a logic controller 1, and the buffer chip includes a logic controller 2. When the logic controller determines, based on a bus clock clk_bus, that the main chip is powered on, the logic controller 1 may send a clock frequency configuration indication to the PLL 1 in the serial interface 1, and the PLL 1 may perform frequency multiplication based on a reference clock frequency of a reference clock REF_CLK to obtain an operating clock frequency of the PLL 1. The logic controller 1 may further send a clock frequency configuration indication to the PLL 2 in the serial interface 2 through the serial interface 1, and the PLL 2 performs frequency multiplication based on the reference clock frequency provided by the reference clock REF_CLK to obtain an operating clock frequency of the PLL 2.

Based on the clock frequencies of the PLL 1 and the PLL 2, the serial interface 1 may determine the transmission rate of the serial interface 1 based on the clock frequency of the PLL 1, and the serial interface 2 may determine the transmission rate of the serial interface 1 based on the clock frequency of the PLL 2.

For example, the clock frequency provided by the reference clock REF_CLK is 500 MHz, and both frequencies of the PLL 1 and the PLL 2 may be multiplied by 4 to obtain clock frequencies of the PLL 1 and the PLL 2 that are both 2000 MHz. It is assumed that a transmission rate of a serial interface is four times a clock frequency of a PLL by default. In this case, the transmission rates of the serial interface 1 and the serial interface 2 are 8000 MT/s, that is, 8 GT/s.

503: The system controls the main chip and the buffer chip to complete a first rate negotiation, and determines a first target rate at which the main chip accesses the buffer chip.

After the transmission rates of the serial interface 1 and the serial interface 2 are determined, the main chip may perform the first rate negotiation between the main chip and the buffer chip based on the transmission rate of the serial interface 1 in the main chip and the transmission rate of the serial interface 2 in the buffer chip. When the negotiation succeeds, the transmission rate of the serial interface in the main chip and the transmission rate of the serial interface in the buffer chip are determined as the first target rate at which the main chip accesses the buffer chip.

The rate negotiation process may be similar to an existing rate negotiation process. For example, the logic controller 1 in the main chip controls the serial interface 1 to send a packet to the serial interface 2 in the buffer chip at a transmission rate of 8 GT/s. If the serial interface 2 receives the packet at a transmission rate of 8 GT/s, and sends, to the serial interface 1, a response packet indicating that the packet is received successfully. In this case, the first rate negotiation succeeds. The main chip may determine that the first target rate at which the serial interface 1 accesses the buffer chip is 8 GT/s, and the main chip may start to access the buffer chip based on the first target rate, for example, perform a read, write, or rewrite operation on the memory chip through the buffer chip. In this case, the first target rate may be understood as a low-frequency rate, and the main chip and the buffer chip complete a low-rate negotiation process.

504: The system controls the main chip to access a register in the buffer chip at the first target rate, to initialize the register in the buffer chip.

At the first target rate, the main chip may access the register in the buffer chip through the serial interface 1 and the serial interface 2, to initialize the register in the buffer chip, so that the register in the buffer chip is in a working state. For example, the main chip may send a register configuration initialization indication to the logic controller 2 through the serial interface 1 and the serial interface 2, and the logic controller 2 initializes the register in the buffer chip based on the indication.

In some embodiments, the buffer chip is a buffer chip. Generally, there may be no CPU on the buffer chip. Therefore, at the first target rate, a CPU in the main chip needs to configure the register in the buffer chip, so that the register in the buffer chip works. Therefore, in this application, the main chip may be supported to access the register in the buffer chip via a user-defined packet.

505: After controlling initialization of each DIMM interface in the buffer chip to be completed, the system obtains a highest rate supported by a DIMM interface between the buffer chip and the memory chip, records the highest rate as a second target rate, and controls the buffer chip to record the second target rate in the register in the buffer chip.

After initialization of each register in the buffer chip is completed, in some embodiments, controlling initialization of each DIMM interface in the buffer chip may be understood as controlling the buffer chip to access, through the DIMM interface, the memory chip connected to the buffer chip, to determine a highest rate supported by the DIMM interface, and using the highest rate supported by the DIMM interface as the second target rate.

Specifically, refer to FIG. 6. The logic controller 2 in the buffer chip may control a DIMM interface DDR PHY2 in the buffer chip to communicate with a DIMM interface DDR PHY3 in the memory chip, that is, a chip 3. In this way, the logic controller 2 determines a type of the chip 3 inserted into a slot of the DDR PHY2, and determines a highest rate supported by the type. The logic controller 2 records the highest rate in the register in the buffer chip. For example, the register is REG.max_dimm_rate, and is configured to store a transmission rate.

506: The system controls the main chip to read the second target rate from the register in the buffer chip.

When the buffer chip stores the highest rate supported by the DIMM interface, the main chip may be notified, through the serial interface 2, that determining of the highest rate is completed. The logic controller 1 in the main chip accesses the register in the buffer chip again through the serial interface 1 and the serial interface 2, for example, accesses the foregoing REG.max_dimm_rate, reads the highest rate supported by the DIMM interface and stored in the register in the buffer chip, and determines the highest rate as the second target rate.

It should be understood that a rate value of the second target rate is usually greater than a rate value of the first target rate. The first target rate is determined through negotiation, to implement low-speed startup between the main chip and the buffer chip. The second target rate is a rate that is jointly negotiated by the serial interfaces after the main chip is started up and that is used by the main chip to access the memory chip through the buffer chip.

507: The system controls the main chip to initialize the clock frequency of the first PLL and the clock frequency of the second PLL based on the second target rate, to enable the clock frequency of the first PLL and the clock frequency of the second PLL to be a clock frequency corresponding to the second target rate.

When the main chip obtains the second target rate, the logic controller 1 may re-initialize the PLL 1 based on the second target rate, and the logic controller 2 may re-initialize the PLL 2 based on the second target rate, to be specific, re-determine clock frequencies of the PLL 1 and the PLL 2.

For example, the second target rate is 32 GT/s, in other words, the highest rate supported by the DIMM interface is 32 GT/s. It is assumed that a relationship between the transmission rate of the serial interface and the clock frequency of the PLL is a fourfold relationship. The logic controller 1 may determine that a re-initialized clock frequency of the PLL 1 is 8000 MHz, and the logic controller 2 may determine that a re-initialized clock frequency of the PLL 2 is 8000 MHz.

508: The system controls the serial interface in the main chip and the serial interface in the buffer chip to perform a second rate negotiation at the second target rate.

Based on the example in step 507, when the re-initialized clock frequency of the PLL 1 and the re-initialized clock frequency of the PLL 2 are 8000 MHz, both the transmission rate of the serial interface 1 and the transmission rate of the serial interface 2 are the second target rate 32 GT/s. In this case, the logic controller 1 may control the serial interface 1 and the serial interface 2 to perform the second rate negotiation.

For example, the logic controller 1 controls the serial interface 1 to send a packet to the serial interface 2 at a transmission rate of 32 GT/s, and the serial interface 2 receives the packet at a transmission rate of 32 GT/s. If the packet is successfully received, the serial interface 2 sends, to the serial interface 1, a response packet indicating that negotiation succeeds.

In this way, a SerDes between the main chip and the buffer chip, and a DRAM interface between the buffer chip and the memory chip work at a same clock frequency (frequency), a clock of the PLL 1 has a same source as a clock of the PLL 2, and clk_ddr and clk_sds2 are clocks with a same source. Based on this, when the main chip accesses the memory chip through the buffer chip, crossing an asynchronous clock domain is avoided and a data transmission delay is reduced.

In some embodiments, when the rate negotiation is performed between the serial interface in the main chip and the serial interface in the buffer chip, negotiation at any specified integer rate is supported. It is not limited to supporting negotiation at a few fixed rates. For example, it is not limited to 8 GT/s and 16 GT/s supported by a PCIe.

In some embodiments, after analysis, an operating frequency (a clock frequency) of the DRAM and the operating frequency of the SerDes may be unified. ADDR5 is used as an example. For a transmission parameter of the DDR5 and a transmission parameter of the SerDes, refer to Table 1.

**Table 1**

| DDR TYPE | DDR5 | | | | | | | | | | | | | |
|---|---|---|---|---|---|---|---|---|---|---|---|---|---|---|
| DDR Data Rate | 8400 | 8000 | 7600 | 7200 | 6800 | 6400 | 6000 | 5600 | 5200 | 4800 | 4400 | 4000 | 3600 | 3200 |
| DDR PHY CLK | 4200 | 4000 | 3800 | 3600 | 3400 | 3200 | 3000 | 2800 | 2600 | 2400 | 2200 | 2000 | 1800 | 1600 |
| DDRC CLK | 2100 | 2000 | 1900 | 1800 | 1700 | 1600 | 1500 | 1400 | 1300 | 1200 | 1100 | 1000 | 900 | 800 |
| SerDes data CLK | 2100 | 2000 | 1900 | 1800 | 1700 | 1600 | 1500 | 1400 | 1300 | 1200 | 1100 | 1000 | 900 | 800 |

In Table 1, DDR TYPE indicates that a type of the DRAM is the DDR5; DDR Data Rate indicates a data transmission rate of the DDR5, and a unit is MT/s; DDR PHY CLK indicates a clock frequency of a DIMM interface of the DDR5; DDRC CLK indicates a clock frequency of a DDR controller of the DDR5; and SerDes data CLK indicates a clock frequency at which data is transmitted through the SerDes. It can be seen that a clock frequency of DDR PHY CLK is twice that of SerDes data CLK. It is assumed that the first target rate in the first rate negotiation is 2100 MT/s in SerDes data CLK. After low-speed startup is implemented, the clock frequency of DDR PHY CLK may be obtained through the second rate negotiation, that is, the obtained second target rate may be, for example, 4200 MT/s. That is, in this application, the clock frequency of SerDes data CLK may be uniformly set to the clock frequency 4200 MT/s of DDR PHY CLK. This unifies the clock frequencies of the SerDes and the DRAM.

509: The system controls service transmission to be performed among the main chip, the buffer chip, and the memory chip.

According to this application, the main chip and the buffer chip use the common reference clock REF_CLK, and a clock of the DIMM interface in the buffer chip has a same source as a clock of the serial interface SerDes in the buffer chip. Based on this, the highest rate finally selected by the main chip and the buffer chip, that is, the second target rate, is related to a highest rate supported by the memory chip that is inserted into the DIMM interface and that is on the buffer chip. When the highest rate supported by the memory chip of the DIMM interface changes, the transmission rate of the serial interface SerDes accordingly changes synchronously, which is equivalent to unifying the clock frequencies of the SerDes and the DRAM. When the main chip accesses the memory chip through the buffer chip, that is, when a data flow crosses a plurality of chips, the data flow is transmitted in a synchronous clock domain, and no delay is consumed in asynchronous processing. This can reduce a data transmission delay. After analysis, an additional delay of the whole system can be controlled within 10 ns in a fine design.

It should be noted that a rate unification process or a frequency unification process in this application occurs in a system power-on startup process, but is not limited to being performed only in the startup process. Alternatively, the frequency unification process may be performed by capturing a packet in a normal communication procedure of the system. For example, the main chip and the buffer chip perform the first rate negotiation and the second rate negotiation in a data packet transmission process, to complete rate unification.

In addition, in a solution of expanding another component through a SerDes, which is not limited to expanding a memory, the method procedure in this application may also be used to implement frequency unification and reduce a delay.

It may be understood that, to implement the foregoing functions, the system for expanding a memory through a serial interface includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In embodiments, division into functional modules may be performed on the system for expanding a memory through a serial interface based on the foregoing method example. For example, each functional module may be obtained through division based on each corresponding function, or two or more functions may be integrated into one processing module. The integrated module may be implemented in a form of hardware. It should be noted that division into modules in embodiments is an example and is merely logical function division. During actual implementation, there may be another division manner.

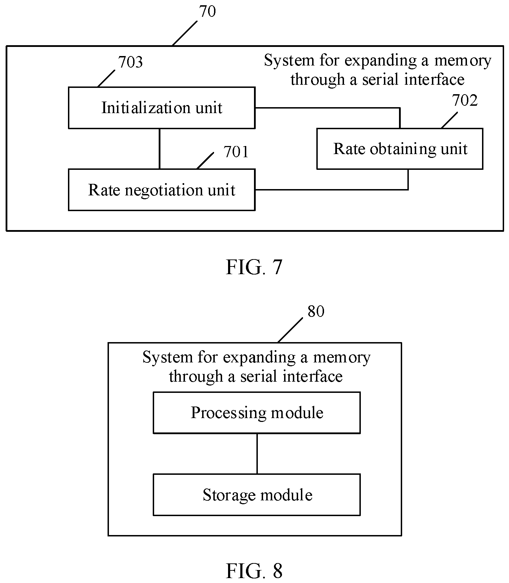

When each functional module is obtained through division based on each corresponding function, FIG. 7 is a diagram of possible composition of a system 70 for expanding a memory through a serial interface in the foregoing embodiment. As shown in FIG. 7, the system 70 for expanding a memory through a serial interface may include a rate negotiation unit 701, a rate obtaining unit 702, and an initialization unit 703.

The rate negotiation unit 701 may be configured to support the system 70 for expanding a memory through a serial interface to perform step 401, step 403, step 503, step 508, step 509, and the like, and/or another process of the technology described in this specification.

The rate obtaining unit 702 may be configured to support the system 70 for expanding a memory through a serial interface to perform step 402, step 505, step 506, and the like, and/or another process of the technology described in this specification.

The initialization unit 703 may be configured to support the system 70 for expanding a memory through a serial interface to perform step 501, step 502, step 504, step 507, and the like, and/or another process of the technology described in this specification.

It should be noted that all related content of the steps in the foregoing method embodiments may be cited in function description of corresponding functional modules. Details are not described herein again.

The system 70 for expanding a memory through a serial interface provided in this embodiment is configured to execute the foregoing method for unifying clock frequencies, and therefore can achieve the same effect as the foregoing implementation method.

When an integrated unit is used, the system 70 for expanding a memory through a serial interface may alternatively be a system 80 for expanding a memory through a serial interface shown in FIG. 8, including a processing module and a storage module. The processing module may be configured to control and manage an action of the system 70 for expanding a memory through a serial interface. For example, the processing module may be configured to support the system 70 for expanding a memory through a serial interface to perform the steps performed by the rate negotiation unit 701, the rate obtaining unit 702, and the initialization unit 703. The storage module may be configured to support the system 70 for expanding a memory through a serial interface to store program code, data, and the like.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory.

In an embodiment, when the processing module is a processor and the storage module is a memory, the processing module may be a processor/controller/control circuit in a main chip in this application, and/or a processor/controller/control circuit in a buffer chip. The storage module may be a memory in the main chip and/or a memory in the buffer chip. The system for expanding a memory through a serial interface involved in this embodiment may be a system having the structure shown in FIG. 2.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps to implement the method for unifying clock frequencies in the foregoing embodiment.

An embodiment of this application further provides a computer storage medium. The computer storage medium stores computer instructions. When the computer instructions are run on an electronic device, the electronic device is enabled to perform the foregoing related method steps to implement the method for unifying clock frequencies in the foregoing embodiment.

An embodiment of this application further provides a computer program product. When the computer program product runs on a computer, the computer is enabled to perform the foregoing related steps to implement the method for unifying clock frequencies performed by the electronic device in the foregoing embodiment.

In addition, an embodiment of this application further provides an apparatus. The apparatus may be specifically a chip, a component, or a module, and the apparatus may include a processor and a memory that are connected. The memory is configured to store computer-executable instructions. When the apparatus runs, the processor may execute the computer-executable instructions stored in the memory, so that the chip performs the method for unifying clock frequencies that is performed by the electronic device in the foregoing method embodiments.

The system, the electronic device, the computer storage medium, the computer program product, or the chip provided in embodiments is configured to perform the corresponding method provided above. Therefore, for beneficial effects that can be achieved by the system, the electronic device, the computer storage medium, the computer program product, or the chip, refer to the beneficial effects in the corresponding method provided above. Details are not described herein again.

Another embodiment of this application provides a system. The system may include the foregoing main chip, a buffer chip, and a plurality of memory chips, and may be configured to implement the foregoing method for unifying clock frequencies.

Based on the descriptions of the implementations, a person skilled in the art may understand that for the purpose of convenient and brief descriptions, division into the functional modules is merely used as an example for description. In actual application, the functions may be allocated to different functional modules for completion based on a requirement. In other words, an inner structure of an apparatus is divided into different functional modules, to complete all or some of the foregoing described functions.

In the several embodiments provided in this application, it should be understood that the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one position, or may be distributed in a plurality of different positions. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional module.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A method for unifying clock frequencies, applied to a system for expanding a memory through a serial interface, wherein the system comprises a main chip, a buffer chip, and at least one memory chip coupled to the buffer chip, a clock of a first phase-locked loop coupled to a serial interface in the main chip and a clock of a second phase-locked loop coupled to a serial interface in the buffer chip have a same source, and both a dual in-line memory module interface in the buffer chip and the serial interface in the buffer chip are coupled to the second phase-locked loop; and the method comprises:
performing, by the system, a first rate negotiation between the main chip and the buffer chip to determine a first target rate at which the main chip accesses the buffer chip after controlling the main chip and the buffer chip to complete serial interface initialization;
determining, by the system, a second target rate supported by the dual in-line memory module interface between the buffer chip and the memory chip after controlling the main chip to complete initialization of the buffer chip at the first target rate; and
configuring, by the system, both a clock frequency of the first phase-locked loop in the main chip and a clock frequency of the second phase-locked loop in the buffer chip as a clock frequency corresponding to the second target rate, and controlling the main chip to complete a second rate negotiation with the buffer chip.

2. The method according to claim 1, wherein the performing a first rate negotiation between the main chip and the buffer chip to determine a first target rate at which the main chip accesses the buffer chip after controlling the main chip and the buffer chip to complete serial interface initialization comprises:
controlling the first phase-locked loop in the main chip and the second phase-locked loop in the buffer chip to perform frequency multiplication based on a same-source reference clock to obtain the operating clock frequency of the first phase-locked loop and the operating clock frequency of the second phase-locked loop, wherein the operating clock frequency of the first phase-locked loop is the same as the operating clock frequency of the second phase-locked loop;
determining a transmission rate of the serial interface in the main chip based on the operating clock frequency of the first phase-locked loop, and determining a transmission rate of the serial interface in the buffer chip based on the operating clock frequency of the second phase-locked loop; and
performing the first rate negotiation between the main chip and the buffer chip based on the transmission rate of the serial interface in the main chip and the transmission rate of the serial interface in the buffer chip; and when the negotiation succeeds, determining the transmission rate of the serial interface in the main chip and the transmission rate of the serial interface in the buffer chip as the first target rate at which the main chip accesses the buffer chip.

3. The method according to claim 1 or 2, wherein the determining a second target rate supported by the dual in-line memory module interface between the buffer chip and the memory chip after controlling the main chip to complete initialization of the buffer chip at the first target rate comprises:
controlling the serial interface in the main chip to access a register in the buffer chip at the first target rate, to initialize the register in the buffer chip;
controlling the buffer chip to access, through the dual in-line memory module interface, the memory chip connected to the buffer chip, to determine a highest rate supported by the dual in-line memory module interface, and using the highest rate supported by the dual in-line memory module interface as the second target rate; and
controlling the buffer chip to record the second target rate in the register in the buffer chip.

4. The method according to claim 3, wherein the configuring both a clock frequency of the first phase-locked loop in the main chip and a clock frequency of the second phase-locked loop in the buffer chip as a clock frequency corresponding to the second target rate, and controlling the main chip to complete a second rate negotiation with the buffer chip comprises:
controlling the main chip to read the second target rate from the register in the buffer chip;
controlling the main chip to initialize the clock frequency of the first phase-locked loop and the clock frequency of the second phase-locked loop based on the second target rate, to enable the clock frequency of the first phase-locked loop and the clock frequency of the second phase-locked loop to be the clock frequency corresponding to the second target rate; and
controlling the serial interface in the main chip and the serial interface in the buffer chip to perform the second rate negotiation at the second target rate.

5. The method according to any one of claims 1 to 4, wherein when the rate negotiation is performed between the serial interface in the main chip and the serial interface in the buffer chip, any specified integer rate is supported.

6. A system for expanding a memory through a serial interface, wherein the system comprises a main chip, a buffer chip, and at least one memory chip coupled to the buffer chip, a clock of a first phase-locked loop coupled to a serial interface in the main chip and a clock of a second phase-locked loop coupled to a serial interface in the buffer chip have a same source, and both a dual in-line memory module interface in the buffer chip and the serial interface in the buffer chip are coupled to the second phase-locked loop, wherein
the main chip is configured to: complete a first rate negotiation with the buffer chip to determine a first target rate at which the main chip accesses the buffer chip after completing serial interface initialization with the buffer chip;
determine a second target rate supported by the dual in-line memory module interface between the buffer chip and the memory chip after completing initialization of the buffer chip at the first target rate; and
configure a clock frequency of the first phase-locked loop in the main chip to a clock frequency corresponding to the second target rate;
the buffer chip is configured to configure a clock frequency of the second phase-locked loop in the buffer chip to the clock frequency corresponding to the second target rate; and
the main chip is further configured to complete a second rate negotiation with the buffer chip.

7. The system according to claim 6, wherein
the main chip is configured to control the first phase-locked loop to perform frequency multiplication based on a same-source reference clock to obtain the operating clock frequency of the first phase-locked loop;
the buffer chip is configured to control the second phase-locked loop to perform frequency multiplication based on the same-source reference clock to obtain the operating clock frequency of the second phase-locked loop, wherein the operating clock frequency of the first phase-locked loop is the same as the operating clock frequency of the second phase-locked loop;
the main chip is configured to determine a transmission rate of the serial interface in the main chip based on the operating clock frequency of the first phase-locked loop;
the buffer chip is configured to determine a transmission rate of the serial interface in the buffer chip based on the operating clock frequency of the second phase-locked loop;
the main chip is configured to: perform the first rate negotiation between the main chip and the buffer chip based on the transmission rate of the serial interface in the main chip and the transmission rate of the serial interface in the buffer chip; and
when the negotiation succeeds, determine the transmission rate of the serial interface in the main chip as the first target rate at which the main chip accesses the buffer chip; and
the buffer chip is configured to: when the negotiation succeeds, determine the transmission rate of the serial interface in the buffer chip as the first target rate at which the main chip accesses the buffer chip.

8. The system according to claim 6 or 7, wherein
the main chip is configured to control the serial interface in the main chip to access a register in the buffer chip at the first target rate, to initialize the register in the buffer chip; and
the buffer chip is configured to: access, through the dual in-line memory module interface, the memory chip connected to the buffer chip, to determine a highest rate supported by the dual in-line memory module interface, and use the highest rate supported by the dual in-line memory module interface as the second target rate; and
record the second target rate in the register in the buffer chip.

9. The system according to claim 8, wherein
the main chip is configured to: read the second target rate from the register in the buffer chip;
initialize the clock frequency of the first phase-locked loop and the clock frequency of the second phase-locked loop based on the second target rate, to enable the clock frequency of the first phase-locked loop and the clock frequency of the second phase-locked loop to be the clock frequency corresponding to the second target rate; and
control the serial interface in the main chip and the serial interface in the buffer chip to perform the second rate negotiation at the second target rate.

10. The system according to any one of claims 6 to 9, wherein when the rate negotiation is performed between the serial interface in the main chip and the serial interface in the buffer chip, any specified integer rate is supported.

11. A frequency control apparatus, wherein the frequency control apparatus is used in a system for expanding a memory through a serial interface, the system comprises a main chip, a buffer chip, and at least one memory chip coupled to the buffer chip, a clock of a first phase-locked loop coupled to a serial interface in the main chip and a clock of a second phase-locked loop coupled to a serial interface in the buffer chip have a same source, and both a dual in-line memory module interface in the buffer chip and the serial interface in the buffer chip are coupled to the second phase-locked loop; and the frequency control apparatus comprises:
a rate negotiation unit, configured to: control the main chip and the buffer chip to perform a first rate negotiation between the main chip and the buffer chip to determine a first target rate at which the main chip accesses the buffer chip after controlling the main chip and the buffer chip to complete serial interface initialization; and
a rate obtaining unit, configured to: determine a second target rate supported by an interface between the buffer chip and the memory chip after controlling the main chip to complete initialization of the buffer chip at the first target rate, wherein
the rate negotiation unit is further configured to: configure both a clock frequency of the first phase-locked loop in the main chip and a clock frequency of the second phase-locked loop in the buffer chip as a clock frequency corresponding to the second target rate, and control the main chip to complete a second rate negotiation with the buffer chip.

12. The frequency control apparatus according to claim 11, wherein the rate negotiation unit is configured to:
control the first phase-locked loop in the main chip and the second phase-locked loop in the buffer chip to perform frequency multiplication based on a same-source reference clock to obtain the operating clock frequency of the first phase-locked loop and the operating clock frequency of the second phase-locked loop, wherein the operating clock frequency of the first phase-locked loop is the same as the operating clock frequency of the second phase-locked loop;
determine a transmission rate of the serial interface in the main chip based on the operating clock frequency of the first phase-locked loop, and determine a transmission rate of the serial interface in the buffer chip based on the operating clock frequency of the second phase-locked loop; and
perform the first rate negotiation between the main chip and the buffer chip based on the transmission rate of the serial interface in the main chip and the transmission rate of the serial interface in the buffer chip; and when the negotiation succeeds, determine the transmission rate of the serial interface in the main chip and the transmission rate of the serial interface in the buffer chip as the first target rate at which the main chip accesses the buffer chip.

13. The frequency control apparatus according to claim 11 or 12, wherein the rate obtaining unit is configured to:
control the serial interface in the main chip to access a register in the buffer chip at the first target rate, to initialize the register in the buffer chip;
control the buffer chip to access, through the dual in-line memory module interface, the memory chip connected to the buffer chip, to determine a highest rate supported by the dual in-line memory module interface, and use the highest rate supported by the dual in-line memory module interface as the second target rate; and
control the buffer chip to record the second target rate in the register in the buffer chip.

14. The frequency control apparatus according to claim 13, wherein the rate negotiation unit is configured to:
control the main chip to read the second target rate from the register in the buffer chip;
control the main chip to initialize the clock frequency of the first phase-locked loop and the clock frequency of the second phase-locked loop based on the second target rate, to enable the clock frequency of the first phase-locked loop and the clock frequency of the second phase-locked loop to be the clock frequency corresponding to the second target rate; and
control the serial interface in the main chip and the serial interface in the buffer chip to perform the second rate negotiation at the second target rate.

15. The frequency control apparatus according to any one of claims 11 to 14, wherein when the rate negotiation is performed between the serial interface in the main chip and the serial interface in the buffer chip, any specified integer rate is supported.

16. A computer-readable storage medium, comprising computer instructions, wherein when the computer instructions are run on an electronic device, the electronic device is enabled to perform the method according to any one of claims 1 to 5.
